# EUROPÄISCHE PATENTANMELDUNG

(11) **EP 4 087 110 A1**
(43) Veröffentlichungstag der Anmeldung: **09.11.2022**
(21) Anmeldenummer: 22169130.6
(22) Anmeldetag: 21.04.2022
(51) Int. Cl.: H02M 3/335, B23K 11/24, H02M 1/00

(54) **EINRICHTUNG UND VERFAHREN ZUR ANSTEUERUNG EINES GLEICHRICHTERS FÜR EINEN SCHWEISSTRANSFORMATOR**

(30) Priorität: 06.05.2021 DE 102021204581
(71) Anmelder: Robert Bosch GmbH, 70442 Stuttgart (DE)
(72) Erfinder: Scholz, Reinhard, 64711 Erbach (DE); Meister, Werner, 64385 Reichelsheim (DE); Herr, Alexander, 64711 Erbach (DE)

(57) **Zusammenfassung**

Es ist eine Einrichtung (35) und ein Verfahren für eine Ansteuerung eines Gleichrichters (40) für einen Schweißtransformator (30) bereitgestellt. Hierbei hat der Gleichrichter (40) zwei Gleichrichterzweige, in denen jeweils mindestens ein Transistor-Modul (Q5, Q6; Q5 bis Q8) zwischen eine Sekundärwicklung des Schweißtransformators (30) und eine Schweißelektrode (11; 12) eines Schweißwerkzeugs (10) geschaltet ist. Die Einrichtung (35) ist ausgestaltet, mindestens eine vorbestimmte elektrische Randbedingung (UQ5; IQ5; UQ6; IQ6; T_Q13; T_Q24; T_s; T_M) im Betrieb von mindestens einem Transistor-Modul (Q5, Q6; Q5 bis Q8) des Gleichrichters (40) zu ermitteln, wobei der Gleichrichter (40) im Betrieb abwechselnd in eine erste Betriebsart oder in eine zweite Betriebsart geschaltet wird, wobei die Transistor-Module (Q5, Q6; Q5 bis Q8) der zwei Gleichrichterzweige in der ersten Betriebsart des Gleichrichters (40) eingeschaltet sind, wenn an der Primärseite des Schweißtransformators (30) keine Leistungseinspeisung stattfindet, und wobei abwechselnd nur einer der zwei Gleichrichterzweige in der zweiten Betriebsart des Gleichrichters (40) eingeschaltet ist, wenn an der Primärseite des Schweißtransformators (30) für eine vorbestimmte Zeitdauer (T_Q13; T_Q24) eine Leistungseinspeisung zum Schweißen stattfindet, wobei die Einrichtung (35) ausgestaltet ist, einen Ausschaltzeitpunkt (t2; t3; t4; t5; t6) von mindestens einem Transistor-Modul (Q5, Q6; Q5 bis Q8) im Betrieb des Gleichrichters (40) auf der Grundlage der ermittelten mindestens einen elektrischen Randbedingung (UQ5; IQ5; UQ6; IQ6; T_Q13; T_Q24; T_s; T_M) und der derzeitigen Betriebsart des Gleichrichters (40) zu bestimmen, um einen Kurzschluss der Sekundärwicklungen des Schweißtransformators (30) zu verhindern.

## Beschreibung

Die vorliegende Erfindung bezieht sich auf eine Einrichtung und ein Verfahren zur Ansteuerung eines Gleichrichters für einen Schweißtransformator.

Schweißen zum Verbinden bzw. Fügen von zwei metallischen Bauteilen, wird bei einer Vielzahl von Produktionsverfahren eingesetzt. Beispielsweise wird Widerstandsschweißen von verschiedenen Blechkombinationen insbesondere in der automatisierten Fahrzeugfertigung eingesetzt. Hier stellt ein Schweißwerkzeug einer Schweißvorrichtung Schweißverbindungen an beispielsweise einer Karosserie eines Fahrzeugs, wie Kraftfahrzeug, Lastkraftwagen, Flugzeug, usw., her. Schweißen zum Verbinden bzw. Fügen von metallischen Teilen wird auch in anderen Fertigungsanlagen, wie beispielsweise Fertigungsstraßen für Möbel, Heizkörper, usw., verwendet. Zudem kann eine Schweißvorrichtung, insbesondere eine Widerstandsschweißvorrichtung, auch in der Einzelfertigung zum Einsatz kommen.

Bei einer Widerstandsschweißvorrichtung wird für die Bereitstellung des Schweißstroms für das Schweißwerkzeug üblicherweise ein Diodengleichrichter verwendet. Der Diodengleichrichter ist mit einer Sekundärseite eines Schweißtransformators verbunden, um zum Schweißen einen Gleichstrom bereitzustellen. Der Gleichstrom beim Schweißen kann eine Magnetisierung der geschweißten Teile verursachen. In Folge dessen wird die Weiterverarbeitung der geschweißten metallischen Teile erschwert. Durch die mögliche Magnetisierung von Anlagenteilen kann es zu Verschmutzung und Fehlfunktionen in der Schweißanlage kommen.

Zur Vermeidung der Magnetisierungseffekte, könnte es überlegt werden, einen Gleichrichter mit vier Thyristoren anstelle eines herkömmlichen Diodengleichrichters zu verwenden. Nachteilig an einer derartigen Lösung ist jedoch, dass ein solcher Thyristor-Gleichrichter im Vergleich zu dem Diodengleichrichter zum einen den doppelten Bauraum benötigt. Durch den doppelten Bauraum wird der Gleichrichter mit vier Thyristoren sehr unhandlich und ineffizient in der Handhabung. Dies ist nicht nur bei einer Vorrichtung zur Bewegung der Widerstandsschweißvorrichtung im Raum, wie beispielsweise einem Roboter, nachteilig.

Zum anderen legt der Thyristor-Gleichrichter im Vergleich zu dem Diodengleichrichter schlechtere Betriebseigenschaften an den Tag, da der Gleichrichter mit vier Thyristoren höhere Verluste und eine geringere Leistung hat. Die schlechteren Betriebseigenschaften sind im Hinblick auf den schonenden Einsatz von Ressourcen unerwünscht. Zudem verursachen die schlechteren Betriebseigenschaften für den Betreiber der Widerstandsschweißvorrichtung höhere Kosten.

Möglich ist außerdem, dass zur Vermeidung des Magnetisierungseffekts eine Polaritätsumschaltung der Schweißspannung für das Schweißwerkzeug vorgenommen wird. In einem solchen Fall ist jedoch zwischen dem Schweißtransformator, der bei einem, insbesondere robotergeführten, Schweißwerkzeug angebracht ist, und einem Umrichter bei einer ortsfest vorgesehenen Schweißsteuerung ein elektrisches Kabel vorzusehen. Über das Kabel kann ein 24V-Signal gesendet werden, mit welchem die Polarität der Schweißspannung variiert wird. Diese zusätzliche Kabelverbindung über den Roboter birgt prinzipbedingt ein hohes Risiko bezüglich beispielsweise Kabeldefekt, insbesondere Kabelbruch, und/oder offener Stecker am Transformator und/oder Kabeltausch. Dadurch ist es erforderlich, vom Transformator zusätzlich ein Rückmeldesignal zurück an die Schweißsteuerung zu geben und eine Überwachung dieses Rückmeldesignals im Transformator und/oder der Steuerung zu realisieren. Diese Überwachung hat auch einen Qualitätssicherungsaspekt für die Festigkeit des Schweißpunktes. Sind mehrere Transformatoren parallel zu schalten, sind auch alle Transformatoren an die zusätzlichen elektrischen Kabel anzuschließen. Dies bedeutet einen großen Platzbedarf für entsprechende Anschlüsse an den Transformatoren und einen großen Verkabelungsaufwand.

Möglich ist stattdessen, einen Gleichrichter mit Transistoren, insbesondere Metalloxidhalbleiter-Feldeffekttransistoren (Metal Oxide Semiconductor Field effect transistors = MOSFETs) zu verwenden, um eine Polaritätsumschaltung der Schweißspannung für das Schweißwerkzeug vorzunehmen. Problematisch bei einem derartigen Gleichrichter ist jedoch, dass am Ende eines Freilaufbetriebs, bei dem auf der Primärseite des Transformators keine Leistungseinspeisung erfolgt, ein Kurzschluss von Sekundärwicklungen des Transformators auftreten kann.

Daher ist es Aufgabe der vorliegenden Erfindung, eine Einrichtung und ein Verfahren zur Ansteuerung eines Gleichrichters für einen Schweißtransformator bereitzustellen, mit welchen die zuvor genannten Probleme gelöst werden können. Insbesondere sollen eine Einrichtung und ein Verfahren zur Ansteuerung eines Gleichrichters für einen Schweißtransformator bereitgestellt werden, bei welchen der störende Magnetisierungseffekt sehr effizient, unaufwändig, kostengünstig und mit hoher Sicherheit vermieden wird.

Diese Aufgabe wird durch eine Einrichtung zur Ansteuerung eines Gleichrichters für einen Schweißtransformator nach Anspruch 1 gelöst, wobei der Gleichrichter zwei Gleichrichterzweige aufweist, in denen jeweils mindestens ein Transistor-Modul zwischen eine Sekundärwicklung des Schweißtransformators und eine Schweißelektrode eines Schweißwerkzeugs geschaltet ist, wobei die Einrichtung ausgestaltet ist, mindestens eine vorbestimmte elektrische Randbedingung im Betrieb von mindestens einem Transistor-Modul des Gleichrichters zu ermitteln, wobei der Gleichrichter im Betrieb abwechselnd in eine erste Betriebsart oder in eine zweite Betriebsart geschaltet wird, wobei die Transistor-Module der zwei Gleichrichterzweige in der ersten Betriebsart des Gleichrichters eingeschaltet sind, wenn an der Primärseite des Schweißtransformators keine Leistungseinspeisung stattfindet, und wobei abwechselnd nur einer der zwei Gleichrichterzweige in der zweiten Betriebsart des Gleichrichters eingeschaltet ist, wenn an der Primärseite des Schweißtransformators für eine vorbestimmte Zeitdauer eine Leistungseinspeisung zum Schweißen stattfindet, und wobei die Einrichtung ausgestaltet ist, einen Ausschaltzeitpunkt von mindestens einem Transistor-Modul im Betrieb des Gleichrichters auf der Grundlage der ermittelten mindestens einen elektrischen Randbedingung und der derzeitigen Betriebsart des Gleichrichters zu bestimmen, um einen Kurzschluss der Sekundärwicklungen des Schweißtransformators zu verhindern.

Die Einrichtung ermöglicht, dass im Betrieb des Gleichrichters kein Kurzschluss von Sekundärwicklungen des Transformators auftreten kann. Insbesondere kann am Ende eines Freilaufbetriebs, bei dem auf der Primärseite des Transformators keine Leistungseinspeisung erfolgt, kein Kurzschluss von Sekundärwicklungen des Transformators auftreten.

Dadurch kann der Gleichrichter sehr sicher betrieben werden. In Folge dessen kann der Gleichrichter den störenden Magnetisierungseffekt sehr effizient, unaufwändig, kostengünstig und mit hoher Sicherheit vermeiden.

Dabei ist bei der Einrichtung kein zusätzliches Kabel zwischen einer ortsfesten Schweißsteuerung und einem Schweißtransformator zu verlegen, um eine Polaritätsumschaltung des Transformators der Schweißvorrichtung zu realisieren. Dies bedeutet einen großen Vorteil, da der Schweißtransformator üblicherweise zusammen mit dem Schweißwerkzeug im Raum bewegt wird. Dadurch ist ein Aufbau des Schweißtransformators in kleiner Baugröße und mit geringen Verlusten realisierbar, ohne dass dadurch Sicherheitseinbußen hinzunehmen sind. Der Schweißtransformator ist vorzugsweise als Mittelfrequenz-Gleichstrom-Transformator (MF-DC-Transformator) ausgeführt und wird auch als Transformator-Gleichrichtereinheit bezeichnet.

Eine resultierende Schweißvorrichtung, insbesondere Widerstandsschweißvorrichtung, hat geringere Verluste und einen kleineren Bauraum jedoch eine höhere Leistung als die zuvor beschriebene Thyristor-Lösung. Außerdem hat die in den Ansprüchen beanspruchte Widerstandsschweißvorrichtung eine ähnliche Leistungsfähigkeit und ähnlichen Bauraum jedoch geringere Verluste als ein MF-DC-Transformator mit einem Diodengleichrichter nach dem Stand der Technik.

Vorteilhafte weitere Ausgestaltungen der Einrichtung sind in den abhängigen Ansprüchen angegeben.

Die Einrichtung kann ausgestaltet sein, zum Ermitteln der mindestens einen vorbestimmten elektrischen Randbedingung die Flussspannung von mindestens einem Transistor-Modul des Gleichrichters zu messen und/oder aus der Schaltfrequenz eines Wechselrichters an der Primärseite des Schweißtransformators zu berechnen und/oder den elektrischen Strom durch mindestens ein Transistor-Modul des Gleichrichters zu messen und/oder den Anstieg des elektrischen Stroms durch mindestens ein Transistor-Modul des Gleichrichters zu messen.

Die zuvor beschriebene Einrichtung kann Teil einer Widerstandsschweißvorrichtung zum Widerstandsschweißen von mindestens einem Bauteil sein. Die Widerstandsschweißvorrichtung kann zudem aufweisen ein Schweißwerkzeug, das zwei Schweißelektroden aufweist, welche zum Schweißen mit dem mindestens einen Bauteil zu kontaktieren ist, mindestens einen Schweißtransformator zum Zuführen eines elektrischen Stroms zu dem Schweißwerkzeug beim Schweißen des mindestens einen Bauteils aufweisen, einen Gleichrichter, der zwei Gleichrichterzweige aufweist, in denen jeweils mindestens ein Transistor-Modul zwischen eine Sekundärwicklung des Schweißtransformators und eine Schweißelektrode des Schweißwerkzeugs geschaltet ist, und eine Steuereinrichtung zur Steuerung des mindestens einen Transistor-Moduls, um zwischen den zwei Betriebsarten und auf der Grundlage des von der Einrichtung bestimmten Ausschaltzeitpunkts zu schalten.

Möglicherweise hat die Widerstandsschweißvorrichtung zudem eine erste Reihenschaltung aus zwei Transistor-Modulen, die zwischen das Schweißwerkzeug und einen Ausgang des Schweißtransformators geschaltet sind, eine zweite Reihenschaltung aus zwei Transistor-Modulen, die zwischen das Schweißwerkzeug und einen anderen Ausgang des Schweißtransformators geschaltet sind, wobei die Steuereinrichtung zur Steuerung der Polarität des mindestens einen Schweißtransformators durch Senden von Polaritätsinformationen an den mindestens einen Schweißtransformator ausgestaltet ist, wobei die Polarität des einen Transistor-Moduls jeder Reihenschaltung gegenüber der Polarität des anderen Transistor-Moduls der Reihenschaltung gedreht ist, so dass die Polarität des mindestens einen Schweißtransformators umschaltbar ist, um an dem Schweißtransformator eine polaritätsumschaltbare Schweißspannung und einen polaritätsumschaltbaren Schweißstrom zu realisieren.

Denkbar ist, dass die Steuereinrichtung ausgestaltet ist, die Polaritätsinformationen in einer Spannung bereitzustellen, die an die Primärseite des mindestens einen Schweißtransformators angelegt wird und/oder wobei die Steuereinrichtung ausgestaltet ist, die Polaritätsinformationen als digitales Signal bereitzustellen.

Gemäß einer Ausgestaltung sind die Steuereinrichtung und der mindestens eine Schweißtransformator zusätzlich zu einer Verbindung für die Spannung, die an die Primärseite des mindestens einen Schweißtransformators anzulegen ist, über mindestens eine Leitung verbunden, wobei die Steuereinrichtung ausgestaltet ist, die Polaritätsinformationen über die mindestens eine Leitung an den Schweißtransformator zu senden.

Hierbei kann der mindestens eine Schweißtransformator ein Polaritätsschaltmodul aufweisen, welches zur Auswertung der Polaritätsinformationen ausgestaltet ist, und welches zur Umschaltung der Polarität des mindestens einen Schweißtransformators auf der Grundlage des Auswerteergebnisses ausgestaltet ist.

Gemäß einer Ausgestaltung ist der mindestens eine Schweißtransformator aus einer Parallelschaltung von mindestens zwei Transformatoren gebildet.

Möglicherweise ist da Polaritätsschaltmodul ausgestaltet, alle parallel geschalteten mindestens zwei Transformatoren immer in die gleiche Polarität zu schalten.

Die Widerstandsschweißvorrichtung kann zudem eine Erfassungseinrichtung zur Erfassung einer Spannung zwischen den zwei Schweißelektroden beim Schweißen mit dem Schweißwerkzeug haben, wobei die Steuereinrichtung ausgestaltet ist, die Umschaltung der Polarität durch einen Vergleich der von der Erfassungseinrichtung erfassten Spannung mit einem vorbestimmten Referenzwert der Spannung zu prüfen.

Der Schweißtransformator kann zwei Ausgänge haben, an welchen jeweils eine Reihenschaltung aus zwei Transistoren vor das Schweißwerkzeug geschaltet ist, und wobei die zwei Transistoren Metall-Oxid-Halbleiter-Feldeffekttransistoren sind.

Die zuvor beschriebene Widerstandsschweißvorrichtung kann Teil einer Anlage zur Behandlung von Gegenständen sein, wobei die Widerstandsschweißvorrichtung zum Widerstandsschweißen von mindestens einem Bauteil vorgesehen ist, das zur Fertigung von mindestens einem der Gegenstände vorgesehen ist.

Optional ist die Anlage zur Fertigung von Fahrzeugrohkarossen oder Heizkörpern oder Ketten als Gegenstände ausgestaltet ist und/oder wobei das Schweißwerkzeug eine Schweißzange mit zwei Schweißelektroden ist, zwischen welchen das mindestens eine Bauteil beim Schweißen angeordnet ist.

Die Aufgabe wird zudem durch ein Verfahren zur Ansteuerung eines Gleichrichters für einen Schweißtransformator nach Anspruch 14 gelöst. Hierfür hat der Gleichrichter zwei Gleichrichterzweige, in denen jeweils mindestens ein Transistor-Modul zwischen eine Sekundärwicklung des Schweißtransformators und eine Schweißelektrode eines Schweißwerkzeugs geschaltet ist, wobei das Verfahren die Schritte aufweist Ermitteln, mit einer elektrischen Einrichtung, mindestens einer vorbestimmten elektrischen Randbedingung im Betrieb von mindestens einem Transistor-Modul des Gleichrichters, wobei der Gleichrichter im Betrieb abwechselnd in eine erste Betriebsart oder in eine zweite Betriebsart geschaltet wird, wobei die Transistor-Module der zwei Gleichrichterzweige in der ersten Betriebsart des Gleichrichters eingeschaltet sind, wenn an der Primärseite des Schweißtransformators keine Leistungseinspeisung stattfindet, und wobei abwechselnd nur einer der zwei Gleichrichterzweige in der zweiten Betriebsart des Gleichrichters eingeschaltet ist, wenn an der Primärseite des Schweißtransformators für eine vorbestimmte Zeitdauer eine Leistungseinspeisung zum Schweißen stattfindet, und Bestimmen, mit einer Einrichtung, eines Ausschaltzeitpunkts von mindestens einem Transistor-Modul im Betrieb des Gleichrichters auf der Grundlage der bestimmten mindestens einen elektrischen Randbedingung und der derzeitigen Betriebsart des Gleichrichters, um einen Kurzschluss der Sekundärwicklungen des Schweißtransformators zu verhindern.

Das Verfahren erzielt die gleichen Vorteile, wie sie zuvor in Bezug auf die Einrichtung genannt sind.

Möglicherweise hat das Verfahren zudem den Schritt Steuern, mit einer Steuereinrichtung, des mindestens einen Transistor-Moduls zum Schalten zwischen den zwei Betriebsarten und auf der Grundlage des von der Einrichtung bestimmten Ausschaltzeitpunkts.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Anlage mit einer Widerstandsschweißvorrichtung und einer Einrichtung gemäß einem ersten Ausführungsbeispiel;
Fig. 2 ein Diagramm von Signalen über der Zeit, die im Betrieb der Widerstandsschweißvorrichtung von Fig. 1 auftreten können;
Fig. 3 ein Blockschaltbild einer Anlage mit einer Widerstandsschweißvorrichtung und einer Einrichtung gemäß einem zweiten Ausführungsbeispiel;
Fig. 4 ein erstes Beispiel für den ersten Teil des Verlaufs einer Netzversorgungsspannung für einen Schweißtransformator der Widerstandsschweißvorrichtung gemäß dem zweiten Ausführungsbeispiel;
Fig. 5 ein zweites Beispiel für den ersten Teil des Verlaufs einer Netzversorgungsspannung für einen Schweißtransformator der Widerstandsschweißvorrichtung gemäß dem zweiten Ausführungsbeispiel;
Fig. 6 ein Blockschaltbild einer Parallelschaltung von Transformatoren einer Widerstandsschweißvorrichtung gemäß einem dritten Ausführungsbeispiel; und
Fig. 7 ein Blockschaltbild einer Parallelschaltung von Transformatoren einer Widerstandsschweißvorrichtung gemäß einer Modifikation des dritten Ausführungsbeispiels.

In den Figuren sind gleiche oder funktionsgleiche Elemente, sofern nichts anderes angegeben ist, mit denselben Bezugszeichen versehen.

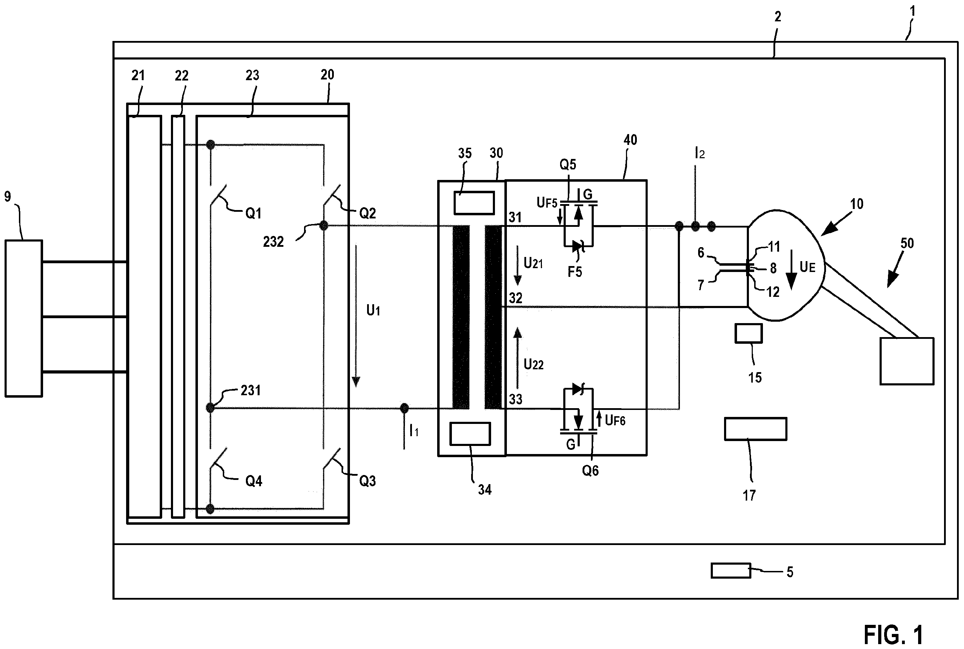

Fig. 1 zeigt sehr schematisch eine Anlage 1 mit einer Widerstandsschweißvorrichtung 2. Die Anlage 1 kann beispielsweise eine Fertigungsanlage für Gegenstände 5, wie Fahrzeuge, Möbel, Heizkörper, usw. sein.

In der Fertigungsanlage 1 können metallische Bauteile 6, 7 durch Widerstandsschweißen derart verbunden bzw. gefügt werden, dass eine Schweißverbindung 8 hergestellt wird. Es ist hierbei möglich, dass beispielsweise zwei Kanten eines einzigen Bauteils 6 durch Widerstandsschweißen mit einer oder mehreren Schweißverbindungen 8 miteinander verbunden werden. Unabhängig davon wie viele Bauteile 6, 7 mit einer Schweißverbindung 8 miteinander verbunden oder gefügt werden, kann/können die Schweißverbindung(en) 8 eine Punktschweißung oder eine Schweißnaht oder Kombinationen daraus sein.

Zum Schweißen hat die Widerstandsschweißvorrichtung 2 ein Schweißwerkzeug 10 in Form einer Schweißzange mit zwei Schweißelektroden 11, 12, eine Erfassungseinrichtung 15, die an dem Schweißwerkzeug 10 für insbesondere eine Erfassung einer Elektrodenspannung U_{E} und/oder Größen eines Schweißstroms I2 angeordnet ist, eine Schweißsteuerung bzw. Steuereinrichtung 17 mit einem damit verbundenen Umrichter 20, einen Schweißtransformator 30 mit drei Ausgängen 31, 32, 33, einem Magnetfeldsensor 34 und einer Einrichtung 35, eine Gleichrichterschaltung 40 mit Gleichrichterzweigen aus einem ersten Transistor-Modul Q5 und einem zweiten Transistor-Modul Q6, und eine Vorrichtung 50 zum Führen des Schweißwerkzeugs 10.

Die Widerstandsschweißvorrichtung 2 kann unter Steuerung der Steuereinrichtung 17 mit dem Schweißwerkzeug 10 eine Schweißverbindung 8 herstellen. Hierfür wird die Widerstandsschweißvorrichtung 2, genauer gesagt der Umrichter 20, von einem Netz 9 mit einer dreiphasigen Netzspannung mit elektrischer Energie versorgt.

Der Umrichter 20 hat einen Netzgleichrichter 21, einen Zwischenkreis 22 und einen Wechselrichter 23. Der Wechselrichter 23 ist als Vollbrücke mit Halbleiterschaltern Q1 bis Q4 ausgestaltet. Jeder der Halbleiterschalter Q1 bis Q4 kann ein Bipolartransistor mit isolierter Gate-Elektrode sein, der auch als IGBT = Insulated-Gate Bipolar Transistor bezeichnet wird. Ist die Netzspannung keine dreiphasige oder einphasige Netzspannung, sondern bereits eine Gleichspannung L(+), L(-), kann der Netzgleichrichter 21 und der Zwischenkreis 22 entfallen.

Der Netzgleichrichter 21 führt eine Gleichrichtung der Netzspannung, die eine vorbestimmte erste Frequenz hat, in eine Gleichspannung durch. Die Gleichspannung wird in dem Zwischenkreis 22 gespeichert, beispielsweise durch Laden eines nicht dargestellten Kondensators. Der Zwischenkreis 22 versorgt den Wechselrichter 23 mit der Gleichspannung L(+), L(-), welche der Wechselrichter 23 in eine Wechselspannung U₁ wandelt. Somit liegt die Wechselspannung U₁ an dem Transformator 30 als Primärspannung U₁ an.

Demzufolge liefert der Umrichter 20 an seinem Ausgang eine Wechselspannung U₁, die eine vorbestimmte zweite Frequenz hat. Die Wechselspannung U₁ dient zur Leistungsversorgung des Transformators 30. Der Transformator 30 dient zur Bereitstellung eines Schweißstroms I2, wie nachfolgend genauer beschrieben.

In der Schaltung des Wechselrichters 23 sind der erste Halbleiterschalter Q1 und der vierte Halbleiterschalter Q4 in Reihe geschaltet. Zudem sind der zweite Halbleiterschalter Q2 und der dritte Halbleiterschalter Q3 in Reihe geschaltet. Zwischen einem ersten Verbindungsknoten 231, der zwischen dem ersten und vierten Halbleiterschalter Q1, Q4 angeordnet ist, und einem zweiten Verbindungsknoten 232, der zwischen dem zweiten und dritten Halbleiterschalter Q2, Q3 angeordnet ist, bildet sich die Primärspannung U₁ an der Primärseite des Schweißtransformators 30 aus. Die Primärwicklung des Transformators 30 ist zwischen beiden Brückenzweigen des Wechselrichters 23 angeordnet. Die Primärwicklung des Transformators 30 wird mit wechselseitiger Ansteuerung der Halbleiterschalter Q1 bis Q4 mit dem elektrischen Strom I₁ beaufschlagt.

Der Wechselrichter 23 erzielt eine Reduzierung der Verlustleistung während der aktiven Energieübertragung von der Primärseite des Transformators 30 zu der Sekundärseite des Transformators 30. Dadurch steht eine höhere Spannung während der Kommutierung des Sekundärstromes I2 zur Verfügung. Dies hat wiederum zur Folge, dass die aktive Energieübertragungszeit und damit auch die Eigenschaften der Schweißvorrichtung 2 verbessert werden.

Unter dem Begriff Kommutierung wird der Übergang des Schweißstromes I2 zwischen den beiden Gleichrichterzweigen des Gleichrichters 40 verstanden. Dies kann auch als Schweißstromkommutierung bezeichnet werden. Abhängig von der Primärspannung U₁ muss der Schweißstrom I2 zumindest zur Hälfte auf den jeweils anderen Gleichrichterzweig des Gleichrichters 40 kommutieren, so dass Energie zum Schweißen übertragen werden kann.

Die Wechselspannung oder Primärspannung U₁ hat beispielsweise eine vorbestimmte zweite Frequenz, die nachfolgend auch als Schaltfrequenz bezeichnet ist, im Bereich von 1 kHz bis 30 kHz, insbesondere im Bereich von 1 kHz bis 10kHz. Somit erfolgt auch die Ansteuerung des Gleichrichters 40 mit der vorbestimmten zweiten Frequenz. Mit einer derartigen zweiten Frequenz ist es möglich, die Baugröße und das Gewicht des Transformators 30 möglichst klein zu halten. Dadurch können auch die Kosten des Transformators 30 gering gehalten werden.

Der Schweißtransformator 30 wandelt die Primärspannung U₁ in eine erste und zweite Sekundärspannung U21, U22. Der Schweißtransformator 30 hat einen zweiteiligen Sekundärkreis. Hierbei ist die Summe der Sekundärspannungen U21, U22 kleiner als der Wert der Primärspannung U1. Zudem wandelt der Schweißtransformator 30 einen Primärstrom I1 auf der Primärseite des Schweißtransformators 30 in den Sekundärstrom I2 auf der Sekundärseite des Schweißtransformators 30 um. Der Sekundärstrom I2, der auch als Schweißstrom bezeichnet werden kann, hat einen höheren Wert als der Primärstrom I1.

Somit liegt an der Sekundärseite des Schweißtransformators 30 eine erste Sekundärspannung U21 zwischen dem ersten und zweiten Ausgang 31, 32 des Schweißtransformators 30 an. Außerdem liegt eine zweite Sekundärspannung U22 zwischen dem zweiten und dritten Ausgang 32, 33 des Schweißtransformators 30 an. Die erste Sekundärspannung U21 und die zweite Sekundärspannung U22 bilden die Schweißspannung U21, U22, welche den Schweißstrom I2 zur Folge hat. Der Anschluss des Synchrongleichrichters 40 ist mit einer sekundärseitigen Mittelanzapfung des Transformators 30 realisiert.

An dem ersten Ausgang 31 des Schweißtransformators 30 ist das erste Transistor-Modul Q5, insbesondere sein Source-Anschluss, angeschlossen. Das erste Transistor-Modul Q5 ist zwischen den Schweißtransformator 30 und das Schweißwerkzeug 10 geschaltet. Genauer gesagt, ist das erste Transistor-Modul Q5 zwischen den Schweißtransformator 30 und die erste Schweißelektrode 11 geschaltet. Die erste Schweißelektrode 11 ist mit den Drain-Anschlüssen der sekundarseitigen Transistor-Module Q5 und Q6 verbunden.

Mit dem zweiten Ausgang 32 des Schweißtransformators 30 ist die zweite Schweißelektrode 12 direkt verbunden. Zwischen den ersten und zweiten Ausgang 31, 32 ist die erste Sekundärwicklung des Transformator 30 geschaltet. Zwischen den zweiten und dritten Ausgang 32, 33 ist die zweite Sekundärwicklung des Transformator 30 geschaltet. Die erste und zweite Sekundärwicklung des Transformators 30 sind in Reihe geschaltet.

An dem dritten Ausgang 33 des Schweißtransformators 30 ist das zweite Transistor-Modul Q6, insbesondere sein Source-Anschluss, angeschlossen. Das zweite Transistor-Modul Q6 ist zwischen den Schweißtransformator 30 und das Schweißwerkzeug 10 geschaltet. Genauer gesagt, ist das zweite Transistor-Modul Q6 zwischen den Schweißtransformator 30 und die erste Schweißelektrode 11 geschaltet.

Die sekundarseitigen Transistor-Module Q5, Q6 dienen zur Beaufschlagung des mindestens einen Bauteils 6, 7 mit dem Schweißstrom I2. Die Transistor-Module Q5, Q6 sind jeweils mit Freilaufdioden F5, F6 ausgestattet. Die Freilaufdioden F5, F6 können in die Halbleiterschalter Q5, Q6 integriert sein. Die Freilaufdioden F5, F6 bieten einen Überspannungsschutz für die Gleichrichtzweige des Gleichrichters 40.

Jedes der Transistor-Module Q5, Q6 hat mindestens einen Transistor. Insbesondere hat jedes der Transistor-Module Q5, Q6 mindestens zwei oder mehr parallel geschaltete Transistoren. Jeder der Transistoren eines Transistor-Moduls Q5, Q6 kann ein Bipolartransistor sein. Alternativ ist jeder der Transistoren eines Transistor-Moduls Q5, Q6 ein Feldeffekttransistor, beispielsweise ein Metalloxidhalbleiter-Feldeffekttransistor (Metal Oxide Semiconductor Field effect transistor = MOSFET). Insbesondere ist/sind die Feldeffekttransistor(en) eines der Transistor-Module Q5, Q6 jeweils N-Kanal MOSFET(s).

Sowohl die Komponenten des ersten als auch des zweiten Gleichrichterzweiges des Gleichrichters 40 sind vorzugsweise symmetrisch ausgebildet. Die Ansteuerung des ersten und des zweiten Gleichrichterzweiges erfolgt mittels im Wesentlichen symmetrischer Impulse. Diese symmetrische Ausbildung ermöglicht eine gleichförmige Magnetisierung des Kerns des Transformators 30, was sich vorteilhaft auf die Energieübertragung von der Primärseite des Transformators 30 auf seine Sekundärseite und die Leistungseigenschaften der Vorrichtung 2 auswirkt. Die Magnetisierung des Kerns des Transformators 30 kann mit dem Magnetfeldsensor 34 gemessen werden. Der Magnetfeldsensor 34 kann mindestens ein Hall-Element aufweisen.

Die Steuereinrichtung 17 führt eine Ansteuerung des Transformators 30 und des Gleichrichters 40 durch. Zusätzlich dazu wird die Einrichtung 35 eingesetzt, wie nachfolgend beschrieben.

Im Freilauf der Schweißvorrichtung 2 findet durch den Umrichter 20 keine Leistungseinspeisung auf der Primärseite des Transformators 30 statt. Somit sind die Halbleiterschalter Q1 bis Q4 ausgeschaltet. Die Steuereinrichtung 17 steuert das Transistor-Modul Q5 sowie das Transistor-Modul Q6 im Freilauf der Schweißvorrichtung 2 derart an, dass die Transistor-Module Q5, Q6 eingeschaltet sind. Somit bewirkt die Steuerung der Steuereinrichtung 17, dass an jedem der Transistor-Module Q5, Q6 eine Schwellenspannung oder Flussspannung U_{F} bzw. U_{F5}, U_{F6} anliegt. Demzufolge sind die Transistor-Module Q5, Q6 leitend geschaltet, wie nachfolgend genauer beschrieben. Bei einem Bipolartransistor entspricht die Schwellenspannung oder Flussspannung U_{F} der Basis-Emitter-Spannung des Bipolartransistors, also der Spannung zwischen dem Basis-Anschluss und dem Emitter-Anschluss des Bipolartransistors. Bei einem Feldeffekttransistor, insbesondere einem MOSFET, entspricht die Schwellenspannung oder Flussspannung U_{F} der Gate-Source-Spannung des Feldeffekttransistors, also der Spannung zwischen dem Gate-Anschluss G und dem Source-Anschluss des Feldeffekttransistors.

Liegt an dem Transistor-Modul Q5 eine Flussspannung U_{F5} an, ist das Transistor-Modul Q5 leitend. Liegt an dem Transistor-Modul Q6 eine Flussspannung U_{F6} an, ist das Transistor-Modul Q6 leitend. Insbesondere sind die Flussspannungen der Transistor-Module Q5, Q6 jeweils gleich, so dass U_{F} = U_{F5} = U_{F6} gilt. Zur Vereinfachung wird daher nachfolgend nur von der Flussspannung U_{F} gesprochen.

Die Einrichtung 35 bestimmt den Ausschaltzeitpunkt für mindestens eines der Transistor-Module Q5, Q6 der Gleichrichtzweige des Gleichrichters 40 am Ende des Freilaufbetriebs, so dass ein Kurzschluss der Sekundärwicklungen des Transformators 30 sicher verhindert wird.

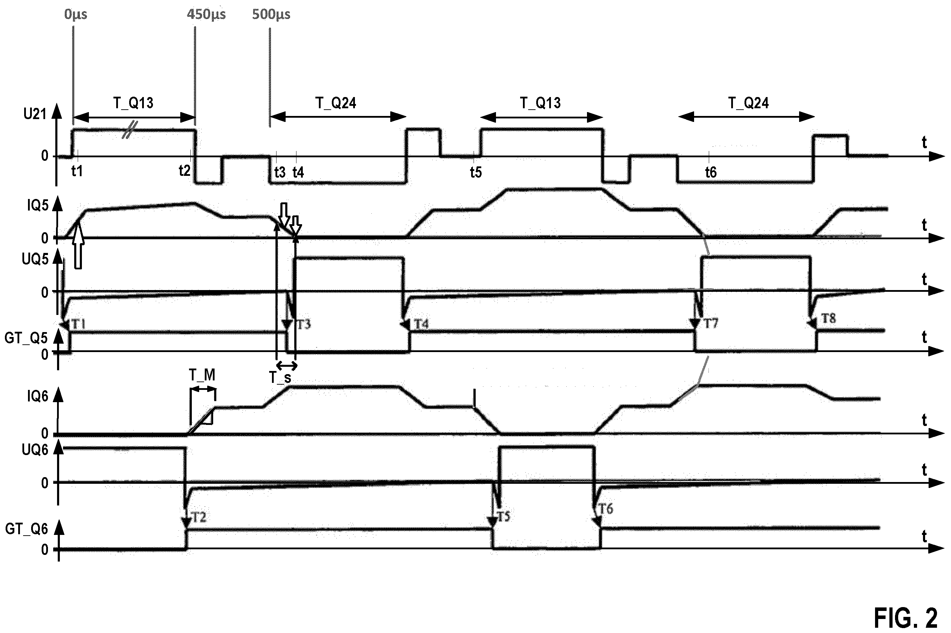

Hierfür betrachtet die Einrichtung 35 elektrische Größen in Bezug auf den Gleichrichter 40, die insbesondere in Fig. 2 über der Zeit t dargestellt sind.

Fig. 2 zeigt ein Beispiel für den zeitlichen Verlauf der Sekundärspannung U21 über der Zeit t bei einer Schaltfrequenz von 1 kHz. Zudem sind die zugehörigen zeitlichen Verläufe des Stroms IQ5 durch das erste Transistor-Modul Q5, der Spannung UQ5 an dem ersten Transistor-Modul Q5, eines Signals GT_Q5 an dem Gate-Anschluss G des ersten Transistor-Moduls Q5, des Stroms IQ6 durch das zweite Transistor-Modul Q6, der Spannung UQ6 an dem zweiten Transistor-Modul Q6, und eines Signals GT_Q6 an dem Gate-Anschluss G des zweiten Transistor-Moduls Q6 gezeigt. Die Spannung UQ5 ist die Spannung zwischen Source-Anschluss und Drain-Anschluss des Transistor-Moduls Q5. Die Spannung UQ6 ist die Spannung zwischen Source-Anschluss und Drain-Anschluss des Transistor-Moduls Q6.

Zu Beginn des gezeigten Signalverlaufs von Fig. 2 sind das erste und zweite Transistor-Modul Q5, Q6 eingeschaltet, wie aus den Zeitverläufen der Spannungen UQ5, UQ6 ablesbar.

Wie in Fig. 2 gezeigt, wechselt die Polarität der Spannung U21 über der Zeit t. Hierfür sind in einer Zeitdauer T_Q13 die Halbleiterschalter Q1, Q3 des Wechselrichters 23 eingeschaltet bzw. geschlossen und die Halbleiterschalter Q2, Q4 geöffnet. In einer Zeitdauer T_Q24 sind die Halbleiterschalter Q2, Q4 des Wechselrichters 23 eingeschaltet bzw. geschlossen und die Halbleiterschalter Q1, Q3 geöffnet.

Abhängig von der Spannung U21 ändert sich der Strom IQ5 im ersten Transistor-Modul Q5 und es treten Diodenflussspannungen an der Freilaufdiode F5 des ersten Transistor-Moduls Q5 als kurzzeitige Spannungsspitzen der Spannung UQ5 auf, insbesondere zu den Zeiten T1, T4, T8. Anhand dieser Spannungsspitzen der Spannung UQ5 steuert die Steuereinrichtung 17 den Gate-Anschluss G des ersten Transistor-Moduls Q5 gemäß dem Signal GT_UQ5 quasi in Echtzeit und unabhängig von einer primarseitigen Ansteuerung an, um das Halbleiterbauelement Q5 einzuschalten. Das erste Transistor-Modul Q5 schaltet zu dem Einschaltzeitpunkt t1 ein, nachdem ein ausreichend starkes Magnetfeld vorliegt. Der Einschaltzeitpunkt t1 kann mit Hilfe einer Messung des Magnetfelds durch den Magnetfeldsensor 34 erfasst werden.

Gemäß der inzwischen durch DIN ISO/IEC 2382 abgelösten Norm DIN 4Q600 (Informationsverarbeitung), Teil 9 (Verarbeitungsabläufe) wird unter Echtzeit der Betrieb eines Rechensystems verstanden, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorherbestimmten Zeitpunkten anfallen. Demzufolge sind die Steuereinrichtung 17 und die Einrichtung 35 derart ausgestaltet, dass durch deren Hardware und Software keine Verzögerungen verursacht werden und auftreten, welche die Einhaltung dieser Bedingungen verhindern.

Bei dem Beispiel von Fig. 2 werden die Halbleiterschalter Q1, Q3 des Wechselrichters 23 nach einer Zeitdauer von 450 µs ausgeschaltet bzw. geschlossen und die Halbleiterschalter Q2, Q4 geöffnet. Zu einem Zeitpunkt t2 beginnt die Einrichtung 35 einen Stromanstieg des Stroms IQ6 des zweiten Transistor-Moduls Q6 zu messen. Der Stromanstieg des Stroms IQ6 wird für eine Zeitdauer T_M gemessen.

Nach Erkennung einer minimalen Flussspannung am Ende der Stromflussdauer IQ5 mit der Einrichtung 35, schaltet die Steuereinrichtung 17 das Halbleiterbauelement Q5 zu einem Zeitpunkt t3 aus. Dadurch entstehen Spannungsspitzen der Spannung UQ5 basierend auf dem kurzzeitigen Freilaufdiodenbetrieb zum Zeitpunkt T3 und T7. Zwischen dem Zeitpunkt t3 und einem Ausschaltzeitpunkt t4 liegt eine feste Schutzzeitdauer T_s. Der Ausschaltzeitpunkt t4 wird dadurch bestimmt, dass der Strom IQ5 nur noch einen Wert von 1 kA hat, was einer Flussspannung von 10 mV des ersten Transistor-Moduls Q5 entspricht. Die Schutzzeitdauer T_s stellt sicher, dass sich die Module Q5, Q6 an die Kommutierungszeit bei unterschiedlichen Netzspannungen anpassen können.

Aufgrund der Spannung U21 in den Zeitdauern T_Q13 steigt der Strom IQ5 in dem ersten Transistor-Modul Q5 an. Nach Ausschalten der Halbleiterschalter Q1, Q3 sinkt der Strom IQ5 und steigt der Strom IQ6 in dem zweiten Transistor-Modul Q6 an.

Durch Schließen der Halbleiterschalter Q2, Q4, während die Halbleiterschalter Q1, Q3 geöffnet sind, wird die Spannung L(+), L(-) primarseitig an den Transformator 30 angelegt. Dadurch ändert sich die Spannung U21 und infolgedessen auch die Spannung UQ6 an dem zweiten Transistor-Modul Q6 bzw. an dem Ausgang des Transformators 30, wie in Fig. 2 gezeigt.

Abhängig von U21 ändert sich der Strom IQ6 im zweiten Transistor-Modul Q6 und es treten Diodenflussspannungen an der Freilaufdiode F6 des zweiten Transistor-Moduls Q6 als kurzzeitige Spannungsspitzen der Spannung UQ6 auf, insbesondere zu den Zeiten T2, T6. Anhand dieser Spannungsspitzen der Spannung UQ6 steuert die Steuereinrichtung 17 den Gate-Anschluss G des zweiten Transistor-Moduls Q6 gemäß dem Signal GT_UQ6 quasi in Echtzeit und unabhängig von einer primarseitigen Ansteuerung an, um das Halbleiterbauelement Q6 einzuschalten. Das erste Transistor-Modul Q6 schaltet ein, nachdem ein ausreichend starkes Magnetfeld vorliegt. Der Einschaltzeitpunkt kann mit Hilfe einer Messung des Magnetfelds durch den Magnetfeldsensor 34 erfasst werden.

Bei dem Beispiel von Fig. 2 werden die Halbleiterschalter Q1, Q3 des Wechselrichters 23 nach einer Zeitdauer von 450 µs ausgeschaltet bzw. geschlossen und die Halbleiterschalter Q2, Q4 geöffnet. Zu einem Zeitpunkt t2 beginnt die Einrichtung 35 einen Stromanstieg des Stroms IQ6 des zweiten Transistor-Moduls Q6 zu messen. Der Stromanstieg des Stroms IQ6 wird für eine Anstiegszeitdauer T_M gemessen.

Nach Erkennung einer minimalen Flussspannung am Ende der Stromflussdauer IQ6 mit der Einrichtung 35, schaltet die Steuereinrichtung 17 das zweite Transistor-Modul Q6 zu einem Ausschaltzeitpunkt t5 aus. Dadurch entsteht eine Spannungsspitze der Spannung UQ6 basierend auf dem kurzzeitigen Freilaufdiodenbetrieb zum Zeitpunkt T5. Die Einrichtung 35 bestimmt den Ausschaltzeitpunkt t5 durch Subtraktion der Anstiegszeitdauer T_M von der Periodendauer der oben genannten Schaltfrequenz, welche gleich der Frequenz des Wechselrichters 23 bzw. der Frequenz der Primärspannung U₁ ist.

Bei dieser Art der Ansteuerung unter Verwendung der Steuereinrichtung 17 und der Einrichtung 35 fungieren die Freilaufdioden F5, F6 der Transistor-Module Q5, Q6 quasi als Gleichrichter und die Transistor-Module Q5, Q6 werden erst eingeschaltet, wenn die zugehörige Freilaufdiode F5, F6 vorwärts leitend ist, insbesondere bei dem Zeitpunkt t1.

Wie in Fig. 2 gezeigt, sind auch Ansteuerphasen vorhanden, in denen beide Halbleiterbauelemente, die Transistor-Module Q5, Q6, leitend sind, da die Stromkommutierung im Gegensatz zu bekannten Losungen (Synchrongleichrichter) über den hier vorhandenen induktiven Energiespeicher (Sekundärwicklung des Transformators 30) und die Primarspannung U₁ gesteuert wird. Im Gegensatz zu einem Synchrongleichrichter, bei dem die Transistor-Module Q5, Q6 in Vorwärtsrichtung mit Strom beaufschlagt werden, werden die Transistor-Module Q5, Q6 bei der beschriebenen Lösung in Rückwärtsrichtung mit Strom beaufschlagt.

Die zuvor beschriebene Ansteuerung unter Verwendung der Steuereinrichtung 17 und der Einrichtung 35 erfolgt vorzugsweise mittels eines integrierten Schaltkreises oder mittels diskreter Bauteile. Die zuvor beschriebene Ansteuerung mit der Steuereinrichtung 17 und der Einrichtung 35 kann zusätzlich oder alternativ mit Hilfe eines Mikrocontrollers realisiert werden. Im Falle der Verwendung eines Mikrocontrollers wäre eine Realisierung auch ohne zusätzliche externe Anschlüsse möglich.

Die Einrichtung 35 führt eine Ermittlung von mindestens einer elektrischen Randbedingung im Betrieb von mindestens einem Transistor-Modul Q5, Q6 des Gleichrichters 40 aus, wobei der Gleichrichter 40 im Betrieb abwechselnd in eine erste Betriebsart (Freilauf), bei der an der Primärseite des Schweißtransformators 30 keine Leistungseinspeisung stattfindet, und eine zweite Betriebsart geschaltet ist, bei der an der Primärseite des Schweißtransformators 30 für eine vorbestimmte Zeitdauer T_Q13, T_Q24 eine Leistungseinspeisung zum Schweißen stattfindet. Die Einrichtung 35 kann zudem mindestens einen der Ausschaltzeitpunkte t2, t3, t4, t5, t6 bestimmen, die zuvor beschrieben sind. Hierbei berücksichtigt die Einrichtung 35 zudem die derzeitige Betriebsart des Gleichrichters 40, um einen Kurzschluss der Sekundärwicklungen des Schweißtransformators 30 zu verhindern.

Die Einrichtung 35 kann eine Ermittlung der Schwellenspannung oder Flussspannung U_{F} an mindestens einem der Transistor-Module Q5, Q6 durchführen. Ergibt die Ermittlung der Einrichtung 35, dass beispielsweise an dem Transistor-Modul Q5 eine Flussspannung U_{F} = U_{F5} < 10 µV anliegt, ermittelt die Einrichtung 35, dass das Transistor-Modul Q5 abzuschalten ist. Demzufolge schaltet die Steuereinrichtung 17 das Transistor-Modul Q5 auf der Grundlage der Bestimmung der Einrichtung 35 ab. Als Folge davon ist der gesamte Gleichrichterzweig des Transistor-Moduls Q5 abgeschaltet.

Bei dem Beispiel von Fig. 2 ermittelt die Einrichtung 35 in Bezug auf das Transistor-Modul Q5 bei dem Zeitpunkt t4 (Abschaltzeitpunkt) eine Flussspannung U_{F} = U_{F5} < 10 µV. Somit schaltet die Steuereinrichtung 17 das Transistor-Modul Q5 zum Zeitpunkt t4 ab.

Allgemein gilt, ergibt die Ermittlung der Einrichtung 35 an einem der Transistor-Module Q5, Q6 eine Flussspannung U_{F} < 10 µV, ermittelt die Einrichtung 35, dass das entsprechende Transistor-Modul Q5, Q6 abzuschalten ist. Nach der Abschaltung kommutiert der abfließende Strom des abgeschalteten Transistor-Moduls Q5, Q6 auf die dem Modul Q5, Q6 parallele Freilaufdiode F5, F6 und ein sicherer Betrieb ist gewährleistet.

Zusätzlich oder alternativ führt die Einrichtung 35 eine Ermittlung der Zeitdauer durch, die seit dem Einschalten der Halbleiterschalter Q1, Q3 vergangen ist. Beträgt die Schaltfrequenz 1 kHz, wie in Fig. 2 als Beispiel gezeigt, ermittelt die Einrichtung 35 den Zeitpunkt t2 als Abschaltzeitpunkt. Somit schaltet die Steuereinrichtung 17 das Transistor-Modul Q5 bei dem Zeitpunkt t2 ab, bei dem 450 µs seit dem Einschalten der Halbleiterschalter Q1, Q3 vergangen ist. Der Abschaltzeitpunkt für das Transistor-Modul Q5 ist also bei einem vorbestimmten Zeitpunkt t2, der um eine vorbestimmte Zeitdauer nach dem Zeitpunkt t1 liegt, bei dem die Halbleiterschalter Q1, Q3 eingeschaltet wurden.

Zusätzlich oder alternativ kann die Einrichtung 35 den Abschaltzeitpunkt ermitteln, indem die Einrichtung 35 den Anstieg des Stroms IQ5 über der Zeit t, also di/dt des Stroms IQ5, bestimmt. Der Wert des Stroms IQ5 kann mit dem Magnetfeldsensor 34 bestimmt werden, wobei die Einrichtung 35 den Anstieg des Stroms IQ5 durch Berechnen von di/dt des Stroms IQ5 bestimmt. Zusätzlich dazu verwendet die Einrichtung 35 eine netzspannungsabhängige Zeittabelle zur Ermittlung des Abschaltzeitpunkts. Die netzspannungsabhängige Zeittabelle kann in der Einrichtung 35 gespeichert sein.

Zusätzlich oder alternativ kann die Einrichtung 35 den Abschaltzeitpunkt als maximale Zeit in Bezug auf die Schaltfrequenz des Wechselrichters 23 sowie eine zusätzliche Freigabezeit T_s und ein adaptives Abschalten ausgelöst durch eine Stromnullerkennung bestimmen. Die maximale Zeit in Bezug auf die Schaltfrequenz des Wechselrichters 23, also die Frequenz der Primärspannung U₁, liegt in Fig. 2 beispielsweise für das Transistor-Modul Q5 nach einem Zeitpunkt t3 vor. Danach schließt sich eine Freigabezeit T_s an, bei der auf eine Stromnullerkennung des Stroms IQ5 gewartet wird, wie mit den Blockpfeilen in Fig. 2 zwischen den Zeitpunkten t3 und t4 gezeigt.

Optional kann die Einrichtung 35 den Abschaltzeitpunkt auf der Grundlage der Schaltfrequenz bestimmen. Beträgt die Schaltfrequenz 1 kHz, wie in Fig. 2 als Beispiel gezeigt, ermittelt die Einrichtung 35 bei dem Beispiel von Fig. 2 den Zeitpunkt t3 als Abschaltzeitpunkt für das Transistor-Modul Q5. Daher schaltet die Steuereinrichtung 17 das Transistor-Modul Q5 bei dem Zeitpunkt t3 ab, bei dem 500 µs seit dem Einschalten der Halbleiterschalter Q1, Q3 vergangen ist. Alternativ ermittelt die Einrichtung 35 bei dem Beispiel von Fig. 2 den Zeitpunkt t4 als Abschaltzeitpunkt für das Transistor-Modul Q5. Der Zeitpunkt t4 ermittelt sich aus der Periodendauer der Schaltfrequenz, die bei dem Zeitpunkt t3 endet, plus einer vorbestimmten Schutzzeitdauer T_s. Zwischen den Zeitpunkten t3 und t4 kann auf den Stromnulldurchgang des Stroms IQ5 gewartet werden, wie mit einem weißen Blockpfeil zwischen den Zeitpunkten t3 und t4 gezeigt. Zudem kann die Einrichtung 35 den Abschaltzeitpunkt auf der Grundlage der Schaltfrequenz abzüglich der vorbestimmten Schutzzeitdauer T_s errechnen.

Erkennt die Einrichtung 35 beispielsweise einen steilen Stromanstieg des Stroms IQ6 bei nahezu abgeklungenem Strom IQ5, wertet die Einrichtung 35 dieses Ergebnis als Brückenkurzschluss. Daher ermittelt die Einrichtung 35 bei dem Beispiel von Fig. 2 den Zeitpunkt t6 als Abschaltzeitpunkt für das Transistor-Modul Q5. Demzufolge schaltet die Steuereinrichtung 17 das Transistor-Modul Q5 bei dem Zeitpunkt t6 ab. Gemäß einer Modifikation des vorangehenden Ausführungsbeispiels ist die Steuereinrichtung 17 ausgestaltet, den Gleichrichter 40 nur als Transistor-Gleichrichter zu betreiben, wenn der Schweißstrom I2 über einem vorbestimmten Wert liegt, beispielsweise 2 kA. Der Wert des Schweißstroms I2 kann mit dem Magnetfeldsensor 34 bestimmt werden. Ermittelt die Einrichtung 35, dass der Wert des Schweißstroms I2 kleiner oder gleich dem vorbestimmten Wert, beispielsweise 2 kA, bestimmt die Einrichtung 35 den Ausschaltzeitpunkt, bei dem die Signale GT_Q5, GT_Q6 auszuschalten sind. Demzufolge ist die Steuereinrichtung 17 ausgestaltet, den Gleichrichter 40 als Dioden-Gleichrichter zu betreiben.

Auf diese Weise ist ein sicherer Betrieb des Gleichrichters und somit des Schweißtransformators 30 und der Schweißvorrichtung 2 gewährleistet.

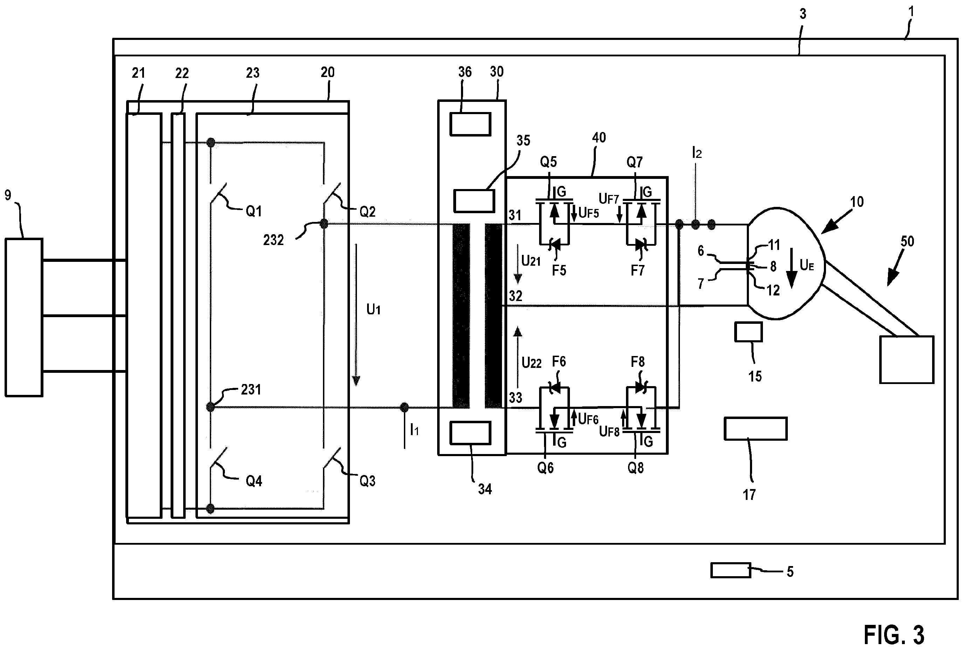

Fig. 3 zeigt eine Widerstandsschweißvorrichtung 3 gemäß einem zweiten Ausführungsbeispiel. Im Unterschied zu der Widerstandsschweißvorrichtung 2 gemäß dem ersten Ausführungsbeispiel hat die Widerstandsschweißvorrichtung 3 gemäß dem vorliegenden Ausführungsbeispiel zudem ein Polaritätsschaltmodul 36 und vier Transistor-Module Q5 bis Q8, die jeweils mindestens einen Transistor aufweisen. Die Transistor-Module Q5 bis Q8 sind jeweils mit Freilaufdioden F5 bis F8 ausgestattet. Die Freilaufdioden F5 bis F8 können in die zugehörigen Halbleiterschalter Q5 bis Q8 integriert sein. Die Freilaufdioden F5 bis F8 bieten einen Überspannungsschutz für die Gleichrichtzweige des Gleichrichters 40, wie zuvor in Bezug auf Fig. 1 beschrieben.

An dem ersten Ausgang 31 des Schweißtransformators 30 ist das erste Transistor-Modul Q5 angeschlossen. Zu dem ersten Transistor-Modul Q5 ist ein zweites Transistor-Modul Q7 in Reihe geschaltet. Dadurch ist die Reihenschaltung aus erstem und zweitem Transistor-Modul Q5, Q7 zwischen den Schweißtransformator 30 und das Schweißwerkzeug 10 geschaltet. Genauer gesagt, ist die Reihenschaltung aus erstem und zweitem Transistor-Modul Q5, Q7 zwischen den Schweißtransformator 30 und die erste Schweißelektrode 11 geschaltet.

Mit dem zweiten Ausgang 32 des Schweißtransformators 30 ist die zweite Schweißelektrode 12 direkt verbunden.

An dem dritten Ausgang 33 des Schweißtransformators 30 ist das dritte Transistor-Modul Q6 angeschlossen. Zu dem dritten Transistor-Modul Q6 ist ein viertes Transistor-Modul Q8 in Reihe geschaltet. Dadurch ist die Reihenschaltung aus drittem und viertem Transistor-Modul Q6, Q8 zwischen den Schweißtransformator 30 und das Schweißwerkzeug 10 geschaltet. Genauer gesagt, ist die Reihenschaltung aus drittem und viertem Transistor-Modul Q6, Q8 zwischen den Schweißtransformator 30 und die erste Schweißelektrode 11 geschaltet.

Jedes der Transistor-Module Q5 bis Q8 hat mindestens einen Transistor. Insbesondere hat jedes der Transistor-Module Q5 bis Q8 mindestens zwei oder mehr parallel geschaltete Transistoren. Jeder der Transistoren eines Transistor-Moduls Q5 bis Q8 kann ein Bipolartransistor sein. Alternativ ist jeder der Transistoren eines Transistor-Moduls Q5 bis Q8 ein Feldeffekttransistor, beispielsweise ein Metalloxidhalbleiter-Feldeffekttransistor (Metal Oxide Semiconductor Field effect transistor = MOSFET). Insbesondere ist/sind die Feldeffekttransistor(en) eines der Transistor-Module Q5 bis Q8 N-Kanal MOSFET(s).

Die Steuereinrichtung 17 führt eine Ansteuerung des Transformators 30 und des Gleichrichters 40 durch. Zusätzlich dazu werden die Einrichtung 35 und das Polaritätsschaltmodul 36 eingesetzt, wie nachfolgend beschrieben.

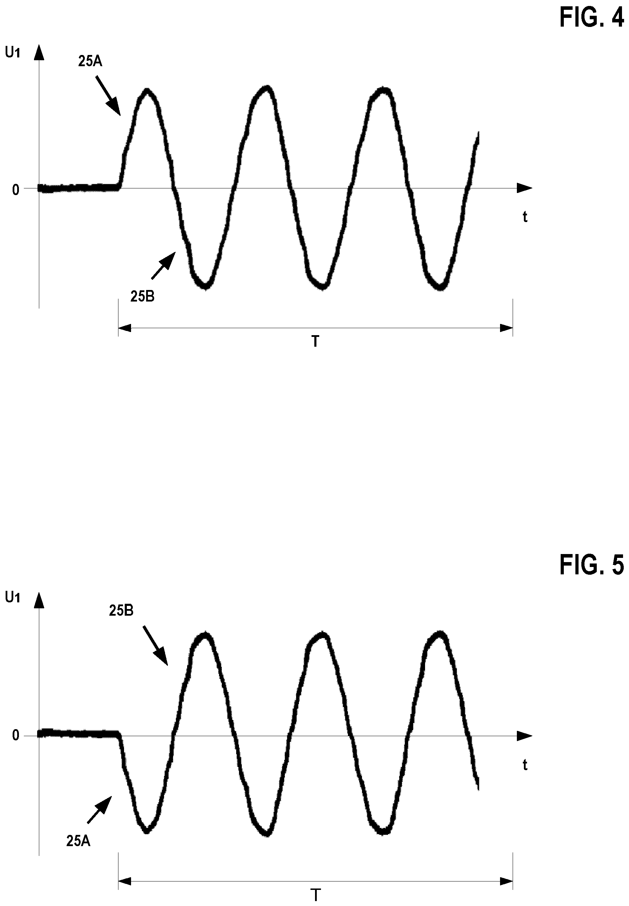

Die Steuereinrichtung 17 kann mit Hilfe der Wechselspannung U₁, die in Fig. 4 über der Zeit t dargestellt ist, zusammen mit dem Polaritätsschaltmodul 36 des Transformators 30 die Transistor-Module Q5, Q7, Q6, Q8 zum Ändern der Polarität des Transformators 30 schalten, wie nachfolgend beschrieben. Gemäß Fig. 4 hat die Wechselspannung U₁ hierfür Polaritätsinformation 25A, 25B, also Information darüber, wie die Polarität des Transformators 30 zu schalten ist.

Das Polaritätsschaltmodul 36 wertet zum Schalten der Polarität des Transformators 30 die Polaritätsinformation 25A, 25B der Wechselspannung U₁ aus. Das Polaritätsschaltmodul 36 kann die Auswertung zumindest teilweise mit Hilfe von Software ausführen, die auf dem Polaritätsschaltmodul 36 abläuft.

Beispielsweise ist das Polaritätsschaltmodul 36 derart eingestellt, dass bei der Auswertung der Polaritätsinformation 25A, 25B der Wechselspannung U₁ davon ausgegangen wird, dass zu Beginn einer Schweißzeit T der erste Leistungsimpuls vom Umrichter 20 zum Transformator 30 immer als positive Spannung U₁ auf den Anschluss U₁ an der Primärseite des Transformators 30 ausgeführt wird, wie in Fig. 2 gezeigt. In einer Ausgestaltung kann diese positive Spannung U₁, welche die Polaritätsinformation 25A bildet, vom Umrichter 20 und/oder dem Polaritätsschaltmodul 36 derart ausgewertet werden, dass für den Transformator 30 eine positive Polarität zu schalten ist. Demzufolge steuert das Polaritätsschaltmodul 36 die Transistor-Module Q5, Q7, Q6, Q8 an, um die vorgegebene positive Polarität des Transformators 30 einzustellen.

Bei einer ersten negativen Spannung U₁ an der Primärseite des Transformators 30 kann diese negative Spannung von dem Polaritätsschaltmodul 36 als negative Ausgangsspannung U₁ der Steuereinrichtung 17 erkannt werden. Die erste negative Spannung U₁ bildet also die Polaritätsinformation 25B, wie in Fig. 2 dargestellt. Demzufolge steuert das Polaritätsschaltmodul 36 die Transistor-Module Q5, Q7, Q6, Q8 an, um den Transformator 30 von der positiven Polarität auf die nun vorgegebene negative Polarität des Transformators 30 einzustellen.

Fig. 5 zeigt eine Alternative zu der Spannung U₁ von Fig. 4. Bei der Alternative gemäß Fig. 5 ist das Polaritätsschaltmodul 36 derart eingestellt, dass bei der Auswertung der Polaritätsinformation 25A, 25B der Wechselspannung U₁ davon ausgegangen wird, dass zu Beginn einer Schweißzeit T der erste Leistungsimpuls vom Umrichter 20 zum Transformator 30 immer als negative Spannung U₁ auf den Anschluss U₁ an der Primärseite des Transformators 30 ausgeführt wird. Demzufolge kann die Polarität des Transformators 30 entsprechend geschaltet werden, wie in dem Polaritätsschaltmodul 36 voreingestellt ist.

Die Steuereinrichtung 17 von Fig. 1 kann somit durch entsprechende Wahl der Polarität der Wechselspannung U₁ vorgeben, wie die Polarität des Transformators 30 geschaltet werden soll. Die Ansteuerung der Transistoren Q5 bis Q8 erfolgt dann durch das Polaritätsschaltmodul 36, das die Polarität der Wechselspannung U₁ auswertet. Das Polaritätsschaltmodul 36 ist ausgestaltet, jeweils in Abhängigkeit der Wechselspannung U₁ und der Polaritätsvorwahl ein Transistor-Modul der Transistor-Module Q5, Q7, Q6, Q8 einzuschalten. Das in Reihe geschaltete Transistor-Modul der Transistor-Module Q5, Q7, Q6, Q8 wird im Synchronbetrieb bei Strom dann negativ leitend eingeschaltet.

Beispielsweise schaltet die Steuereinrichtung 17 das erste Transistor-Modul oder Transistor Q5 jeweils in Abhängigkeit der Ausgangsspannung und der Polaritätsvorwahl ein. Das in Reihe geschaltete zweite Transistor-Modul oder Transistor Q7 wird im Synchronbetrieb bei Strom dann negativ leitend eingeschaltet.

Prinzipiell gilt, das Transistor-Modulpärchen oder Transistorpärchen für die Polaritätswahl ist positiv leitend, das Transistor-Modulpärchen oder Transistorpärchen für die Synchrongleichrichtung negativ leitend. Bei dem obigen Beispiel gilt also, die Transistor-Module Q5, Q6 für die Polaritätswahl sind positiv leitend, die Transistor-Module Q7, Q8 für die Synchrongleichrichtung sind negativ leitend. Wird keine Polumschaltung benötigt, können die Transistor-Module Q5, Q6 aus Fig. 1 entfallen. Alternativ können die Transistor-Module Q7, Q8 aus Fig. 1 entfallen.

Insbesondere sind die Transistor(en) der Transistor-Module Q5, Q7 N-Kanal MOSFETs. Dasselbe gilt für die Transistor(en) der Transistor-Module Q6, Q8. Hierbei bezeichnet MOSFET einen Metalloxidhalbleiter-Feldeeffekttransistor (Metal Oxide Semiconductor Field effect transistor = MOSFET).

Dadurch sind im Gleichrichterzweig bzw. der Gleichrichterschaltung 40 pro Gleichrichter dann zwei Transistoren, nämlich bei dem Beispiel die Transistor-Module Q5, Q7, in Reihe eingeschaltet. Dasselbe gilt in gleicher Weise für die Reihenschaltung aus drittem und viertem Transistor-Modul Q6, Q8 als weiteren Gleichrichter des Gleichrichtzweigs bzw. der Gleichrichterschaltung 40.

Auf diese Weise kann an dem Schweißtransformator 30 eine polaritätsumschaltbare Schweißspannung U21, U22 und ein polaritätsumschaltbarer Schweißstrom I2 realisiert werden.

Somit ist die Polaritätsinformation 25A, 25B mit dem Leistungsanschluss des Transformators 30 verknüpft. Dadurch ist kein Kabel zwischen einem zusätzlichen 24V-Ausgang am Umrichter 20 und einem entsprechenden Eingang am Transformator 39 für die Polumschaltung erforderlich. Noch dazu kann auf das Rückmeldesignal zur Mitteilung der Ist-Polarität des Transformators 30 aufgrund der Auswertung durch das Polaritätsschaltmodul 36 verzichtet werden. Stattdessen ist mit der Erfassungseinrichtung 15 eine Polaritätsüberwachung durch den polrichtigen Anschluss der standardmäßig vorhandenen Erfassung der Elektrodenspannung U_{E} beim Schweißen auf Basis einer Referenzwerterfassung möglich, die bei der Inbetriebnahme vorgenommen wird. Mit anderen Worten, kann das Polaritätsschaltmodul 36 und/oder die Steuereinrichtung 17 mit Hilfe der Erfassungseinrichtung 15 die Polaritätsüberwachung mittels einer Erfassung des Istwerts der Spannung U_{E} an den Elektroden 11, 12 beim Schweißen und dem Vergleich des Istwerts der Spannung U_{E} mit dem zugehörigen Referenzwert der Spannung U_{E} an den Elektroden 11, 12 durchführen. Der Referenzwert kann in dem Polaritätsschaltmodul 36 und/oder der Steuereinrichtung 17 gespeichert sein.

Unabhängig von den beiden Varianten gemäß Fig. 4 und Fig. 5 wird bei der Steuerung mit Hilfe der Steuereinrichtung 17 außerdem beim Schweißen von unterschiedlich dicken Bauteilen, wie Blechen, usw., folgendermaßen vorgegangen. Hierbei ergeben sich insbesondere bei Aluminiumblechen, jedoch nicht ausschließlich bei solchen Bauteilen, große Vorteile, wie nachfolgend beschrieben.

Bei solchen Bauteilen steuert die Steuereinrichtung 17 die Polumschaltung derart, dass die positive Elektrode des Schweißwerkzeugs 10 am beispielsweise dickeren Bauteil 6 und die negative Elektrode des Schweißwerkzeugs 10 am dünneren Bauteil 7 anliegt. Dadurch wird die Schweißlinse bzw. die Schweißverbindung 8 mehr in das dickere Bauteil 6 gezogen, da beim Schweißen die positive Elektrode bzw. die daran angebrachte Elektrodenkappe immer heißer als die negative Elektrode bzw. die daran angebrachte Elektrodenkappe ist und außerdem das dünnere Bauteil 7 grundsätzlich heißer als das dickere Bauteil 6 wird. Dadurch zieht sich der heißeste Punkt bei der Schweißung immer in Richtung positive Elektrode, also hier das dickere Bauteil 6, an welcher die positive Elektrode anliegt.

Somit können mit Hilfe einer derart gesteuerten Polumschaltung schnell und zuverlässig die Elektroden 11, 12 des Schweißwerkzeugs 10 von negativ nach positiv oder zurück geschaltet werden, je nachdem welches Bauteil 6, 7 welcher Elektrode 11, 12 des Schweißwerkzeugs 10 zugeordnet ist, um Schweißverbindungen 7 hoher Qualität herzustellen. Damit ist eine Drehung des Schweißwerkzeugs 10 von Schweißstelle zu Schweißstelle nicht erforderlich. Dies ist besonders vorteilhaft, da eine Drehung des Schweißwerkzeugs 10 zeitaufwändig und steuerungsintensiv, also damit kostenintensiv ist. Außerdem ist eine Drehung des Schweißwerkzeugs 10 gegebenenfalls mit hohem Kollisionsrisiko verbunden oder sogar wegen beengter Platzverhältnisse am Bauteil gar nicht möglich.

Ein weiterer Vorteil der zuvor beschriebenen Steuerung durch die Steuereinrichtung 17 besteht darin, dass durch die Polumschaltung der Kappenabbrand an den Elektroden 11, 12 gleichmäßig eingestellt wird. An der heißeren positiven Elektrode entsteht nämlich jeweils ein größerer Kappenabbrand als an der negativen Elektrode. Die Kappen sind bei Erreichen eines maximalen Abbrandes abzufräsen und nach mehrmaligem Fräsen zu wechseln. Dies verursacht Stillstände in der Fertigung. Da durch die Polumschaltung jede der Elektroden 11, 12 je nach Bedarf als positive Elektrode oder als negative Elektrode schaltbar ist, muss seltener gefräst werden und die Kappen sind seltener zu wechseln. Somit kann durch die beschriebene Steuerung der Steuereinrichtung 17 die Zeit für die Fertigung effektiver genutzt werden. Zudem werden durch den seltener erforderlichen Kappenwechsel wertvolle Ressourcen und Kosten gespart.

Dadurch ist die Widerstandsschweißvorrichtung 2 besonders vorteilhaft bei Blechkombinationen einsetzbar, bei welchen es bei einer Schweißzange als Schweißwerkzeug 10 zum unerwünschtem Abbrand der Schweißelektroden 11, 12 oder Materialwanderung kommt. Außerdem kann die Widerstandsschweißvorrichtung 3 besonders vorteilhaft beim Schweißen von Kettengliedern und beim Schweißen von Heizkörpern verwendet werden.

Insgesamt kann das Modul 36 einen sehr wirksamen Beitrag dazu leisten, dass eine Schweißvorrichtung, insbesondere Widerstandsschweißvorrichtung, eine unaufwändige ausführbare und überprüfbare Polaritätsumschaltung eines Schweißtransformators in kleiner Baugröße, mit geringen Verlusten und geringem Aufwand realisieren kann.

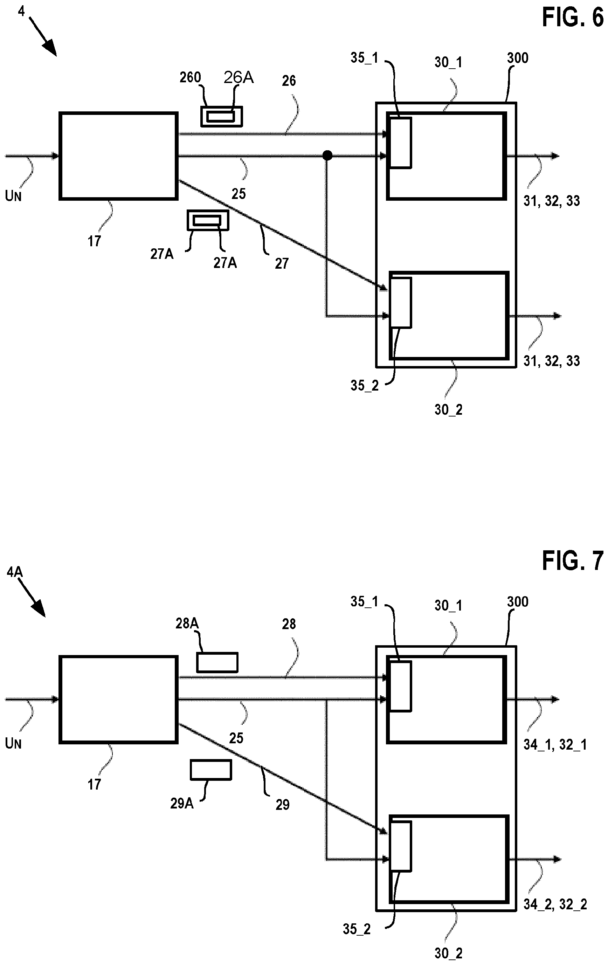

Fig. 6 zeigt eine Widerstandsschweißvorrichtung 4 gemäß einem dritten Ausführungsbeispiel. Die Widerstandsschweißvorrichtung 4 ist in vielen Teilen auf die gleiche Weise aufgebaut, wie für die Widerstandsschweißvorrichtung 2, 3 gemäß einem der vorangehenden Ausführungsbeispiele beschrieben.

Im Unterschied zur Widerstandsschweißvorrichtung 3 gemäß einem der vorangehenden Ausführungsbeispiele hat die Widerstandsschweißvorrichtung 4 gemäß dem vorliegenden Ausführungsbeispiel einen Schweißtransformator 300, der aus einer Parallelschaltung von zwei Transformatoren 30_1, 30_2 aufgebaut ist. Jeder der zwei Transformatoren 30_1, 30_2 kann aufgebaut sein, wie der Transformator 30 gemäß Fig. 1 oder Fig. 3. Jeder der zwei Transformatoren 30_1, 30_2 von Fig. 4 ist an den Ausgang 25 der Steuereinrichtung 17 angeschlossen.

Der Transformator 30_1 ist zudem über eine Busleitung 26 mit der Steuereinrichtung 17 verbunden. Der Transformator 30_1 ist zudem über eine Busleitung 27 mit der Steuereinrichtung 17 verbunden. Die Busleitungen 26, 27 realisieren einen Bus, über den Daten 260, 270 vorzugsweise in Echtzeit übertragen werden können. In den Daten 260, 270 sind Polaritätsinformationen 26A, 27A übertragbar. Insbesondere wird auf dem Bus mit einem Sercos-Protokoll oder Ethernet-Protokoll, oder einem CAN- Protokoll oder einem beliebigen anderen industriellen Bus kommuniziert.

Demzufolge sind auch die Steuereinrichtung 17 und das Polaritätsschaltmodul 36 derart ausgestaltet, dass durch deren Hardware und Software keine Verzögerungen verursacht werden und auftreten, welche die Einhaltung dieser Bedingungen verhindern. Demzufolge wird die Verarbeitung der Information der Spannung U₁ garantiert schnell genug für die Schaltung der Polarität der Transformatoren 30_1, 30_2, 300 ausgeführt, so dass durch die Verarbeitung der Information der Spannung U₁ keine Verzögerung bei der Abarbeitung eines Schweißvorgangs an dem mindestens einen Bauteils 6, 7 stattfindet.

Somit erfolgt bei dem Transformator 300 die Steuerung der Polarität seiner parallel geschalteten Transformatoren 30_1, 30_2 über die Busleitungen 26, 27. Die über die Busleitungen 26, 27 gesendeten Polaritätsinformationen 26A, 27A sind mit den Polaritätsschaltmodulen 36_1, 36_2 auswertbar. Die Polaritätsinformationen 26A, 27A können auch die Ist-Polarität des zugehörigen Transformators 30_1, 30_2 aufweisen. Die Polarität des jeweiligen Transformators 30_1, 30_2 kann mit den Polaritätsschaltmodulen 36_1, 36_2 geschaltet werden. Hierbei sind die Polaritätsschaltmodule 36_1, 36_2 ausgestaltet, die Polarität der Transformatoren 30_1, 30_2 derart zu schalten, dass die Polarität der Transformatoren 30_1, 30_2 immer gleich ist. Mit der Erfassungseinrichtung 15 ist die Polaritätsüberwachung mittels der standardmäßig vorhandenen Erfassung des Istwerts der Elektrodenspannung U_{E} beim Schweißen und dem Vergleich mit dem Referenzwert der Elektrodenspannung U_{E} an den Elektroden 11, 12 durchführbar.

Die zuvor beschriebene Steuerung der Polarität des Transformators 300 über den polrichtigen Leistungsanschluss 25 stellt eine sehr sichere Lösung im Fall von Transformatorparallelschaltung dar, da jeder Transformator 30_1, 30_2 die gleiche Leistungsversorgung hat.

Infolge dessen ist auch bei der Variante von Fig. 6 kein zusätzlicher Verkabelungsaufwand notwendig, sondern es werden die vorhandenen Busleitungen 26, 27 verwendet, um die Polarität des Transformators 300 zu schalten.

Selbstverständlich ist der Schweißtransformator 300 in einer Modifikation des vorliegenden Ausführungsbeispiels aus einer Parallelschaltung von mehr als zwei Transformatoren 30_1, 30_2 aufbaubar. In diesem Fall sind auch die anderen Transformatoren jeweils an den Bus angeschlossen, der mit den Busleitungen 26, 27 gebildet wird.

Alternativ ist es möglich, die zuvor beschriebene Polaritätsumschaltung mittels der Information 26A, 27A und der Busleitung 26, 27 auch bei dem Transformator 30 von Fig. 1 durchzuführen, also bei dem kein weiterer Transformator parallel geschaltet ist. Hierbei kann eine der Informationen 26A, 27A mittels einer der Busleitungen 26, 27 zusätzlich oder anstelle der Polaritätsinformationen 25A, 25B bereitgestellt und verwendet werden, um die Polaritätsumschaltung auszuführen. Dadurch ist auch eine Redundanz gewährleistbar. Außerdem ist es möglich auszuwählen, ob die Polaritätsinformationen 25A, 25B aus der Spannung U₁ oder die Informationen 26A, 27A mittels einer der Busleitungen 26, 27 verwendet werden sollen.

Fig. 7 zeigt eine Widerstandsschweißvorrichtung 4A gemäß einer Modifikation des dritten Ausführungsbeispiels. Die Widerstandsschweißvorrichtung 4A ist in vielen Teilen auf die gleiche Weise aufgebaut, wie für die Widerstandsschweißvorrichtung 4 von Fig. 6 beschrieben.

Im Unterschied zur Widerstandsschweißvorrichtung 4 von Fig. 6 hat die Widerstandsschweißvorrichtung 4A von Fig. 7 diskrete Anschlüsse bzw. Leitungen 28, 29, mit welchen die Steuerung des Polaritätswechsels der Transformatoren 30_1, 30_2 und somit des Transformators 300 realisiert ist. Über die diskreten Anschlüsse bzw. Leitungen 28, 29 werden Polaritätsinformationen 28A, 29A in Form eines digitalen Signals gesendet. Das Signal hat im Verlauf der Zeit t mindestens zwei verschiedene Werte, die einen ausreichenden Abstand haben, um die verschiedenen Polaritäten als Information 28A, 29A zu übertragen.

Durch eine Variante der Transformatoren 30_1, 30_2, 300 kann die Polarität der Transformatoren 30_1, 30_2, 300 beispielsweise bei Fremdsteuerungen diskret angesteuert werden. Dadurch kann auch beispielsweise eine übergeordnete Schweißsteuerung, welche mehrere Schweißwerkzeuge 10 steuert, die Transformatoren 30_1, 30_2, 300 ansteuern. Zudem ist über die zusätzliche Verkabelung, die durch die diskreten Anschlüsse bzw. Leitungen 28, 29 realisiert ist, eine Überwachung der Polarität bzw. deren Umschaltung in der Steuereinrichtung 17 überwachbar.

Ein weiterer Vorteil einer derartigen Steuerung der Polarität der Transformatoren 30_1, 30_2, 300 ist ein einfacher Tausch eines bisherigen MOSFET-Transformators mit seiner 24V Versorgung gegen einen prozessbedingt notwendigen Transformator 30_1, 30_2, 300 mit Polumschaltung. Ein derartiger Austausch ist bei einem entsprechend angepassten Umrichter 20 ohne Änderung eines vorhandenen Kabelpakets der Vorrichtung 10 möglich, da keine zusätzlichen Anschlüsse am Transformator 30_1, 30_2, 300 benötigt werden.

Alternativ ist es möglich, die zuvor beschriebene Polaritätsumschaltung mittels der Information 28A, 29A und der Leitungen 28, 29 auch bei dem Transformator 30 von Fig. 1 oder Fig. 3 durchzuführen. Hierbei kann eine der Informationen 28A, 29A über eine der Leitungen 28, 29 zusätzlich oder anstelle der Polaritätsinformationen 25A, 25B bereitgestellt und verwendet werden, um die Polaritätsumschaltung auszuführen. Dadurch ist auch eine Redundanz gewährleistbar.

Alle zuvor beschriebenen Ausgestaltungen der Anlage 1, der Widerstandsschweißvorrichtungen 2, 3, 4, 4A und des Widerstandsschweißverfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transistor-Module Q5 bis Q8 können alternativ Bipolartransistoren sein, wobei jedoch die Ausführung als Metall-Oxid-Halbleiter-Feldeffekttransistoren (MOS-FET) bevorzugt wird.

Alternativ oder zusätzlich ist es möglich, dass nicht (nur) das Polaritätsschaltmodul 36, sondern auch die Steuereinrichtung 17 ausgestaltet ist, das in Reihe geschaltete Transistor-Modul Q7, Q8 im Synchronbetrieb bei elektrischem Strom negativ leitend einzuschalten.

## Patentansprüche

1. Einrichtung (35) für eine Ansteuerung eines Gleichrichters (40) für einen Schweißtransformator (30), wobei der Gleichrichter (40) zwei Gleichrichterzweige aufweist, in denen jeweils mindestens ein Transistor-Modul (Q5, Q6; Q5 bis Q8) zwischen eine Sekundärwicklung des Schweißtransformators (30) und eine Schweißelektrode (11; 12) eines Schweißwerkzeugs (10) geschaltet ist,
wobei die Einrichtung (35) ausgestaltet ist, mindestens eine vorbestimmte elektrische Randbedingung (UQ5; IQ5; UQ6; IQ6; T_Q13; T_Q24; T_s; T_M) im Betrieb von mindestens einem Transistor-Modul (Q5, Q6; Q5 bis Q8) des Gleichrichters (40) zu ermitteln, wobei der Gleichrichter (40) im Betrieb abwechselnd in eine erste Betriebsart oder in eine zweite Betriebsart geschaltet wird, wobei die Transistor-Module (Q5, Q6; Q5 bis Q8) der zwei Gleichrichterzweige in der ersten Betriebsart des Gleichrichters (40) eingeschaltet sind, wenn an der Primärseite des Schweißtransformators (30) keine Leistungseinspeisung stattfindet, und wobei abwechselnd nur einer der zwei Gleichrichterzweige in der zweiten Betriebsart des Gleichrichters (40) eingeschaltet ist, wenn an der Primärseite des Schweißtransformators (30) für eine vorbestimmte Zeitdauer (T_Q13; T_Q24) eine Leistungseinspeisung zum Schweißen stattfindet, und
wobei die Einrichtung (35) ausgestaltet ist, einen Ausschaltzeitpunkt (t2; t3; t4; t5; t6) von mindestens einem Transistor-Modul (Q5, Q6; Q5 bis Q8) im Betrieb des Gleichrichters (40) auf der Grundlage der ermittelten mindestens einen elektrischen Randbedingung (UQ5; IQ5; UQ6; IQ6; T_Q13; T_Q24; T_s; T_M) und der derzeitigen Betriebsart des Gleichrichters (40) zu bestimmen, um einen Kurzschluss der Sekundärwicklungen des Schweißtransformators (30) zu verhindern.

2. Einrichtung (35) nach Anspruch 1, wobei die Einrichtung (35) ausgestaltet ist, zum Ermitteln der mindestens einen vorbestimmten elektrischen Randbedingung die Flussspannung (U_{F}) von mindestens einem Transistor-Modul (Q5, Q6; Q5 bis Q8) des Gleichrichters (40) zu messen und/oder aus der Schaltfrequenz eines Wechselrichters an der Primärseite des Schweißtransformators (30) zu berechnen und/oder den elektrischen Strom (IQ5; IQ6) durch mindestens ein Transistor-Modul (Q5, Q6; Q5 bis Q8) des Gleichrichters (40) zu messen und/oder den Anstieg des elektrischen Stroms (IQ5; IQ6) durch mindestens ein Transistor-Modul (Q5, Q6; Q5 bis Q8) des Gleichrichters (40) zu messen.

3. Widerstandsschweißvorrichtung (2; 3; 4; 4A) zum Widerstandsschweißen von mindestens einem Bauteil (6, 7), mit
einem Schweißwerkzeug (10), das zwei Schweißelektroden (11, 12) aufweist, welche zum Schweißen mit dem mindestens einen Bauteil (6, 7) zu kontaktieren ist,
mindestens einem Schweißtransformator (30) zum Zuführen eines elektrischen Stroms zu dem Schweißwerkzeug (10) beim Schweißen des mindestens einen Bauteils (6, 7),
einem Gleichrichter (40), der zwei Gleichrichterzweige aufweist, in denen jeweils mindestens ein Transistor-Modul (Q5, Q6; Q5 bis Q8) zwischen eine Sekundärwicklung des Schweißtransformators (30) und eine Schweißelektrode (11; 12) des Schweißwerkzeugs (10) geschaltet ist,
einer Einrichtung (35) nach einem der vorangehenden Ansprüche, und
einer Steuereinrichtung (17) zur Steuerung des mindestens einen Transistor-Moduls (Q5, Q6; Q5 bis Q8), um zwischen den zwei Betriebsarten und auf der Grundlage des von der Einrichtung (35) bestimmten Ausschaltzeitpunkts (t2; t3; t4; t5; t6) zu schalten.

4. Widerstandsschweißvorrichtung (2; 3; 4; 4A) nach Anspruch 3, zudem mit
einer ersten Reihenschaltung aus zwei Transistor-Modulen (Q5, Q7), die zwischen das Schweißwerkzeug (10) und einen Ausgang (31) des Schweißtransformators (30) geschaltet sind,
einer zweiten Reihenschaltung aus zwei Transistor-Modulen (Q6, Q8), die zwischen das Schweißwerkzeug (10) und einen anderen Ausgang (33) des Schweißtransformators (30) geschaltet sind,
wobei die Steuereinrichtung (17) zur Steuerung der Polarität des mindestens einen Schweißtransformators (30) durch Senden von Polaritätsinformationen (25A, 25B; 26A, 27A; 28A, 29A) an den mindestens einen Schweißtransformator (30) ausgestaltet ist,
wobei die Polarität des einen Transistor-Moduls (Q5; Q6) jeder Reihenschaltung gegenüber der Polarität des anderen Transistor-Moduls (Q7; Q8) der Reihenschaltung gedreht ist, so dass die Polarität des mindestens einen Schweißtransformators (30) umschaltbar ist, um an dem Schweißtransformator (30) eine polaritätsumschaltbare Schweißspannung (U21, U22) und einen polaritätsumschaltbaren Schweißstrom (12) zu realisieren.

5. Widerstandsschweißvorrichtung (2; 3; 4; 4A) nach Anspruch 3 oder 4, wobei die Steuereinrichtung (17) ausgestaltet ist, die Polaritätsinformationen (25A, 25B) in einer Spannung (Ui) bereitzustellen, die an die Primärseite des mindestens einen Schweißtransformators (30) angelegt wird und/oder wobei die Steuereinrichtung (17) ausgestaltet ist, die Polaritätsinformationen (26A, 27A) als digitales Signal bereitzustellen.

6. Widerstandsschweißvorrichtung (4; 4A) nach einem der Ansprüche 3 bis 5,
wobei die Steuereinrichtung (17) und der mindestens eine Schweißtransformator (30; 300) zusätzlich zu einer Verbindung für die Spannung (U₁), die an die Primärseite des mindestens einen Schweißtransformators (30) anzulegen ist, über mindestens eine Leitung (26, 27; 28, 29) verbunden sind, und
wobei die Steuereinrichtung (17) ausgestaltet ist, die Polaritätsinformationen (26A, 27A; 28A, 29A) über die mindestens eine Leitung (26, 27; 28, 29) an den Schweißtransformator (30; 300) zu senden.

7. Widerstandsschweißvorrichtung (3; 4; 4A) nach einem der Ansprüche 3 bis 6, wobei der mindestens eine Schweißtransformator (30) ein Polaritätsschaltmodul (36) aufweist, welches zur Auswertung der Polaritätsinformationen (25A, 25B; 26A, 27A; 28A, 29A) ausgestaltet ist, und welches zur Umschaltung der Polarität des mindestens eine Schweißtransformators (30) auf der Grundlage des Auswerteergebnisses ausgestaltet ist.

8. Widerstandsschweißvorrichtung (4; 4A) nach einem der vorangehenden Ansprüche, wobei der mindestens eine Schweißtransformator (30) aus einer Parallelschaltung von mindestens zwei Transformatoren (30_1, 30_2) gebildet ist.

9. Widerstandsschweißvorrichtung (2; 3; 4; 4A) nach Anspruch 7 und 8, wobei das Polaritätsschaltmodul (36) ausgestaltet ist, alle parallel geschalteten mindestens zwei Transformatoren (30_1, 30_2) immer in die gleiche Polarität zu schalten.

10. Widerstandsschweißvorrichtung (2; 3; 4; 4A) nach einem der vorangehenden Ansprüche,
zudem mit einer Erfassungseinrichtung (15) zur Erfassung einer Spannung (U_{E}) zwischen den zwei Schweißelektroden (11, 12) beim Schweißen mit dem Schweißwerkzeug (10),
wobei die Steuereinrichtung (17) ausgestaltet ist, die Umschaltung der Polarität durch einen Vergleich der von der Erfassungseinrichtung (15) erfassten Spannung (U_{E}) mit einem vorbestimmten Referenzwert der Spannung (U_{E}) zu prüfen.

11. Widerstandsschweißvorrichtung (2; 3; 4; 4A) einem der vorangehenden Ansprüche, wobei der Schweißtransformator (30) zwei Ausgänge (31, 33) hat, an welchen jeweils eine Reihenschaltung aus zwei Transistoren (Q5, Q7; Q6, Q8) vor das Schweißwerkzeug (10) geschaltet ist, und wobei die zwei Transistoren (Q5, Q7; Q6, Q8) Metall-Oxid-Halbleiter-Feldeffekttransistoren sind.

12. Anlage (1) zur Behandlung von Gegenständen (5), mit
einer Widerstandsschweißvorrichtung (2; 3; 4; 4A) nach einem der vorangehenden Ansprüche,
wobei die Widerstandsschweißvorrichtung (2; 3; 4; 4A) zum Widerstandsschweißen von mindestens einem Bauteil (6, 7) vorgesehen ist, das zur Fertigung von mindestens einem der Gegenstände (5) vorgesehen ist.

13. Anlage (1) nach Anspruch 12, wobei die Anlage (1) zur Fertigung von Fahrzeugrohkarossen oder Heizkörpern oder Ketten als Gegenstände (5) ausgestaltet ist und/oder wobei das Schweißwerkzeug (10) eine Schweißzange mit zwei Schweißelektroden (11, 12) ist, zwischen welchen das mindestens eine Bauteil (6, 7) beim Schweißen angeordnet ist.

14. Verfahren für eine Ansteuerung eines Gleichrichters (40) für einen Schweißtransformator (30), wobei der Gleichrichter (40) zwei Gleichrichterzweige aufweist, in denen jeweils mindestens ein Transistor-Modul (Q5, Q6; Q5 bis Q8) zwischen eine Sekundärwicklung des Schweißtransformators (30) und eine Schweißelektrode (11; 12) eines Schweißwerkzeugs (10) geschaltet ist, wobei das Verfahren die Schritte aufweist
Ermitteln, mit einer elektrischen Einrichtung (35), mindestens einer vorbestimmten elektrischen Randbedingung (UQ5; IQ5; UQ6; IQ6; T_Q13; T_Q24; T_s; T_M) im Betrieb von mindestens einem Transistor-Modul (Q5, Q6; Q5 bis Q8) des Gleichrichters (40), wobei der Gleichrichter (40) im Betrieb abwechselnd in eine erste Betriebsart oder in eine zweite Betriebsart geschaltet wird, wobei die Transistor-Module (Q5, Q6; Q5 bis Q8) der zwei Gleichrichterzweige in der ersten Betriebsart des Gleichrichters (40) eingeschaltet sind, wenn an der Primärseite des Schweißtransformators (30) keine Leistungseinspeisung stattfindet, und wobei abwechselnd nur einer der zwei Gleichrichterzweige in der zweiten Betriebsart des Gleichrichters (40) eingeschaltet ist, wenn an der Primärseite des Schweißtransformators (30) für eine vorbestimmte Zeitdauer (T_Q13; T_Q24) eine Leistungseinspeisung zum Schweißen stattfindet, und
Bestimmen, mit einer Einrichtung (35), eines Ausschaltzeitpunkts (t2; t3; t4; t5; t6) von mindestens einem Transistor-Modul (Q5, Q6; Q5 bis Q8) im Betrieb des Gleichrichters (40) auf der Grundlage der bestimmten mindestens einen elektrischen Randbedingung (UQ5; IQ5; UQ6; IQ6; T_Q13; T_Q24; T_s; T_M) und der derzeitigen Betriebsart des Gleichrichters (40), um einen Kurzschluss der Sekundärwicklungen des Schweißtransformators (30) zu verhindern.

15. Verfahren nach Anspruch 14, zudem mit dem Schritt Steuern, mit einer Steuereinrichtung (17), des mindestens einen Transistor-Moduls (Q5, Q6; Q5 bis Q8) zum Schalten zwischen den zwei Betriebsarten und auf der Grundlage des von der Einrichtung (35) bestimmten Ausschaltzeitpunkts (t2; t3; t4; t5; t6).
